# EUROPEAN PATENT SPECIFICATION

(11) **EP 3 067 507 B1**
(45) Date of publication and mention of the grant of the patent: **13.03.2019**
(21) Application number: 16151309.8
(22) Date of filing: 14.01.2016
(51) Int. Cl.: E06B 9/266, B23D 23/00

(54) **CUTTING MACHINE FOR WINDOW COVERING**
SCHNEIDMASCHINE FÜR FENSTERABDECKUNG
MACHINE DE COUPE POUR GARNITURE DE FENÊTRE

(30) Priority: 10.03.2015 TW 104203531
(43) Date of publication of application: 14.09.2016
(73) Proprietor: Nien Made Enterprise Co., Ltd., Taichung City 408 (TW)
(72) Inventor: LEE, Wen-Yeu, 708 Tainan City (TW); YEH, Ching-Fang, 408 Taichung City (TW)
(74) Representative: Viering, Jentschura & Partner mbB Patent- und Rechtsanwälte

(56) References cited:
- US-A1- 2001 054 338
- US-A1- 2003 110 913
- US-A1- 2010 089 217
- US-A1- 2014 290 457
- US-B1- 6 435 066

## Description

### BACKGROUND OF THE INVENTION

### 1. Technical Field

The present invention relates to a cutting machine for cutting rails and window covering material of a window covering, according to the preamble of claim 1.

### 2. Description of Related Art

Typically, there are a variety of sizes of windows, so the manufactures sell the window coverings to retailers, and the retailers cut the window covering to fit a specific window. A conventional cutting machine for cutting a window covering is taught in U.S. Patent No. 6,435,066 (hereafter the '066 patent), titled "Cutting apparatus for window covering and methods therefor", which provides a cutting device on a machine base to cut the window covering.

The '066 patent teaches that a blade, which is used to cut the window coverings, has to simultaneously touch the headrail, the bottom rail, and the window covering material before cutting. However, when the cutting machine of the '066 patent is used to cut a blind with a cellular shade or slats, it would have an uneven cutting result when the blinds are not pressed enough. Therefore, the key to have a nice cutting result is how to firmly press the blinds. However, the clamping device of the '066 patent can't provide sufficient clamping force. On the contrary, if power of the clamping device is too large, it might damage some slats of the blinds.

Furthermore, the '066 patent teaches that the blade simultaneously touches the headrail, the bottom rail, and the window covering material before cutting. It makes the user have to exert a large strength to cut the window coverings, and sometime it will damage the elements with such large strength. Beside, the '066 patent provides a rigid machine base to sustain the window coverings that would damage the blade after the blade cutting the window coverings several times, and that is bad to the afterwards cutting tasks.

US 2014/290457 A1 discloses a cutting machine for cutting a window covering according to the preamble of claim 1. The window covering includes a first rail, a covering material, and a second rail, comprising a machine base having a sustaining face for putting the window covering thereon; and a cutting device provided on the machine base, and including a cutter, which is controllable to reciprocate in a direction substantially perpendicular to the sustaining face, wherein the cutter has a blade edge, and an angle is formed between the blade edge and the sustaining face to cut the first rail, the covering material, and the second rail in sequence.

### BRIEF SUMMARY OF THE INVENTION

The primary objective of the present invention directs to a cutting machine for a window covering, which could evenly cut the window covering with a good cutting quality.

The secondary objective of the present invention directs to a cutting machine for a window covering, which provides a design for a safe operation, and a controllable clamping force.

In order to achieve the objectives of the present invention, the present invention provides a cutting machine for cutting a window covering according to claim 1, wherein the window covering includes a first rail, a covering material, and a second rail, the cutting machine comprising a machine base having a sustaining face for putting the window covering thereon; and a cutting device provided on the machined base, and including a cutter, which is controllable to reciprocate in a direction substantially perpendicular to the sustaining face, wherein the cutter has a blade edge, and an angle is formed between the blade edge and the sustaining face to cut the first rail, the covering material, and the second rail of the window covering in sequence. The machine base is provided with a non-rigid pad, and the sustaining face is formed on the non-rigid pad. The machine base further includes a rigid board and a guiding board; the non-rigid pad and the guiding board are fixed to the rigid board, and a cutting slot is formed between non-rigid pad and the guiding board for the cutter to pass therethrough; the rigid board is provided with a discharging opening, which is lower than the sustaining face; wherein the guiding board (614) is fixed to the rigid board (612) in an oblique direction and has a guiding surface (614a) which slopes towards the discharging opening (612b); and a cut-off part of the window covering after being cut leaves the machine base through the guiding board and the discharging opening in sequence.

Preferred embodiments are disclosed in the dependent claims.

In an embodiment, the angle between the blade edge and the sustaining face is between the 0 and 90 degrees.

In an embodiment, the cutter crosses an edge of the non-rigid pad and is adjacent to the edge of the non-rigid pad when the cutter is moved to cut the window covering.

In an embodiment, the cutting device further includes a frame and a control bar; the cutter is slidably connected to the frame for reciprocation; the control bar is pivoted on the frame to be moved between a first position and a second position; and the cutter is moved by moving the control bar.

In an embodiment, the cutting device further includes a positioning post and a locker; the positioning post is fixed to the frame; the locker is pivoted on the control bar; the locker has a hook to engage the positioning post when the control bar is moved to the first position, and disengages the positioning post when the control bar is moved to the second position.

In an embodiment, the cutting device further includes a stopping member fixed to the locker to separate the control bar from the hook.

In an embodiment, the hook of the locker has a round edge to abut against the positioning post and move the locker off when the control bar is being moved to the first position from the second position, and then the locker automatically moves back to engage the positioning post because of gravity when the control bar arrives at the first position.

In an embodiment, the cutting device further includes a connecting bar, a stopping block, and a movable block; the connecting bar is pivotally connected to the frame to drive the stopping block to reciprocate along the machine base; the connecting bar has an elongated slot; the elongated slot is oblique to an axial line, which is perpendicular to the sustaining face; the movable block has a portion received in the elongated slot to be moved along with the control bar between a third position and a fourth position; the movable block drives the connecting bar to move when the movable block is moved between the third position and the fourth position; the connecting bar drives the stopping block to move toward the cutter when the movable block is moved to the third position, and the connecting bar drives the stopping block to move away from the cutter when the movable block is moved to the fourth position.

In an embodiment, the cutting device further includes at least one bar; the at least one bar has an end proximal to the sustaining face and an end distal to the sustaining face; the stopping block is connected to the at least one bar, and is movable on the at least one bar and fixed at a position by operating a knob.

In an embodiment, the cutting machine of the present invention further includes a clamping device having two fixed bases, a clamping block, a screw rod, an operating wheel, and a spring. The fixed bases are mounted on the machine base, the clamping block is movable between the fixed bases, the screw bar is fixed to the fixed bases while the clamping block is screwed with the screw bar, and the operating wheel is fixed to an end of the screw bar; the spring fits the screw bar and has opposite ends urging the operating wheel and one of the fixed bases, whereby the clamping block is moved between the fixed bases by turning the operating wheel.

In an embodiment, the clamping device further includes a first stopping block and a second stopping block; the first stopping block is fixed to the operating wheel, and the second stopping block is fixed to one of the fixed bases; turning the operating wheel will make the first stopping block abut against the second stopping block that makes the operating wheel may not be turned anymore.

With the design of above, the cutting machine of the present invention could provide the window covering a stable and consistent clamping force that could have a nice cutting task. The present invention further provides several function, including safe operation, automatically collecting the waste parts of the window covering after being cut, and elongating the life of the cutter.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of a preferred embodiment of the present invention;
FIG. 2 is another perspective view of the preferred embodiment of the present application;
FIG. 3 is a partial perspective view of the preferred embodiment of the present application;
FIG. 4 is a front view of FIG. 3, showing the control bar at the first position and the cutter at the pre-cut position;
FIG. 5 is a rear view of FIG. 3;
FIG. 6 is a right view of FIG. 3, showing the movable block at the third position;
FIG. 7 is a partial perspective view of the preferred embodiment of the present invention, showing the relative positions between the first stopping block and the second stopping block;
FIG. 8 is a front view of FIG. 3, showing the control bar at the second position and the cutter at the post-cut position;
FIG. 9 is a right view of FIG. 3, showing the movable block at the fourth position; and
FIG. 10 is a front view of FIG. 3, showing the relationship of the locker and the positioning post.

### DETAILED DESCRIPTION OF THE INVENTION

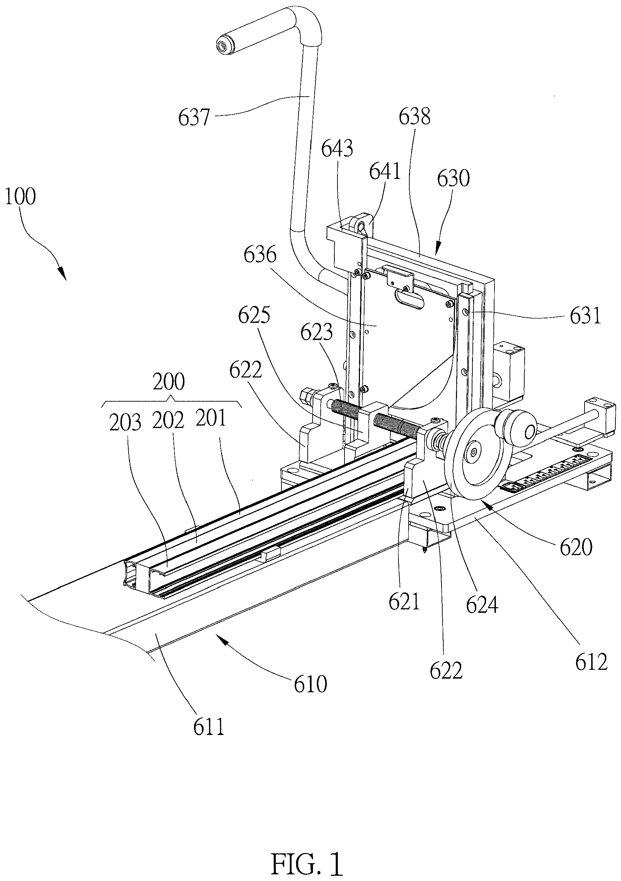

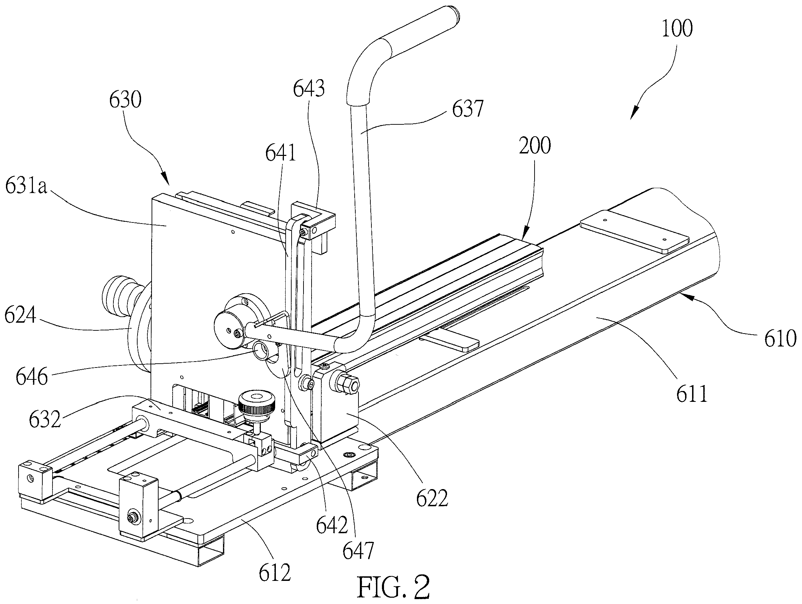

As shown in FIG. 1 and FIG. 2, a cutting machine 100 of the preferred embodiment of the present invention is used to cut a window covering including a first rail 201, a covering material 202, and a second rail 203. The covering material could be a cellular shade or slats, and the first rail 201 could be a headrail of the covering material 202 while the second rail 203 is a bottom rail, or reverse. The cutting machine 100 includes a machine base 610, a clamping device 620, and a cutting device 630.

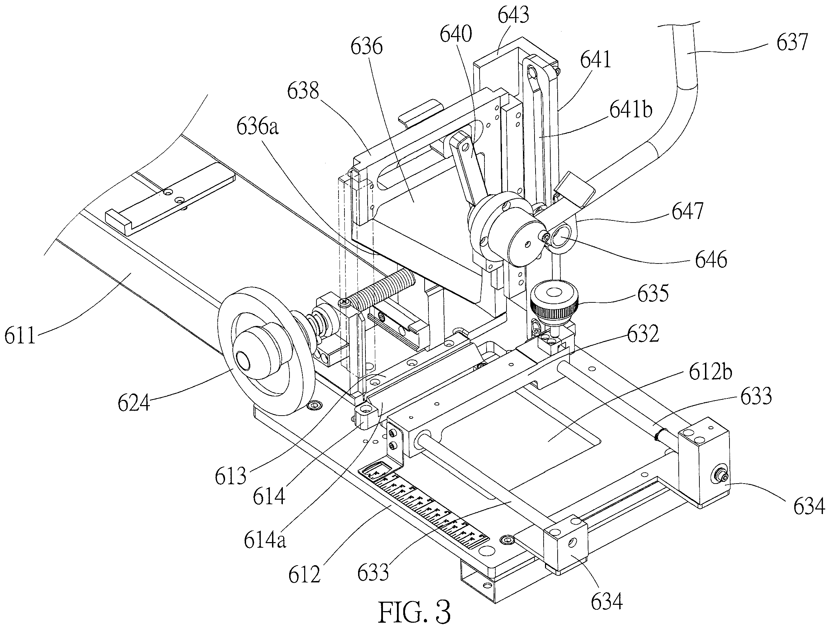

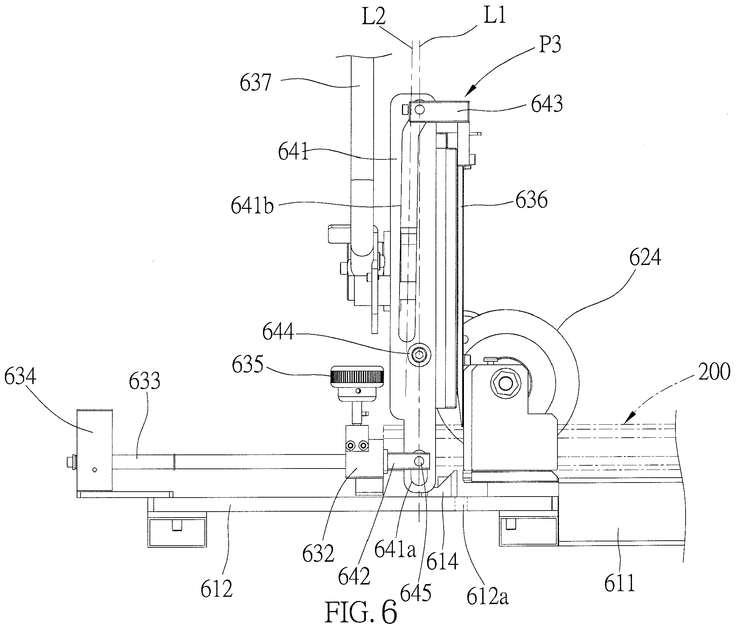

As shown in FIGS. from FIG. 3 to FIG. 6, the machine base includes a main rail 611, a rigid board 612, a non-rigid pad 613, and a guiding board 614. The main rail 611 and the rigid board 612 are connected together for the window covering to stably rest thereon. The rigid board 612 has an elongated cutting slot 612a (FIG. 6) and a discharging opening 612b next to the cutting slot 612a. The non-rigid pad 613 is fixed to the rigid board 612, and has a flat sustaining face 613a on a top side thereof to sustain the window covering 200. The guiding board 614 is fixed to the rigid board 612 in an oblique direction, and has a guiding surface 614a which slopes towards the discharging opening 612b. The cutting slot 612a of the rigid board 612 is between the non-rigid pad 613 and the guiding board 614, and the discharging opening 612b is lower than the sustaining face 613a of the non-rigid pad 613.

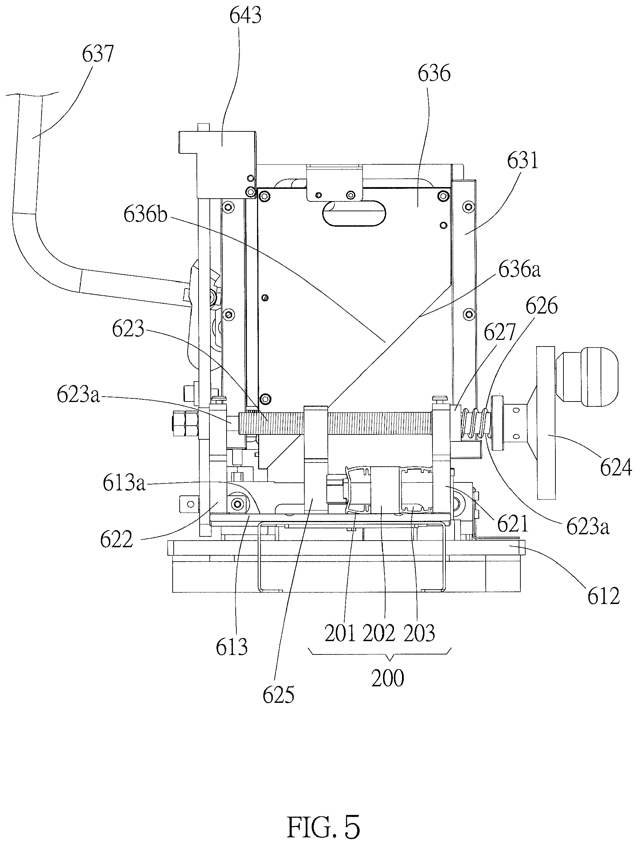

As shown in FIG. 5, the clamping device 620 is mounted on the machine base 610 to firmly hold the window covering 200 for the cutting operation. The clamping device 620 includes two fixed bases 621, 622, a screw rod 623, an operating wheel 624, and a clamping block 625. The fixed bases 621, 622 are fixed to the machine base 610, and keep a distance from each other. The screw rod 623 has two round sections 623a passing through the fixed bases 621, 622 respectively, so that the screw rod 623 is able to move in an axial direction and rotate. The operating wheel 624 is connected to an end of the screw rod 623 to be operated by a user to rotate the screw rod 623 in both directions. The clamping block 625 is provided with a threaded hole (not shown) to be meshed with a thread section, which is between the round sections 623a, of the screw rod 623. Therefore, when the operating wheel 624 is turned, the clamping block 625 moves on the screw rod 623 between the fixed bases 621, 622. The window covering 200 is place in a space between the clamping block 625 and the fixed base 621 to be clamped by turning the operating wheel 624. It is noted that while the operating wheel 624 is being overturned, the screw rod 623 is moving toward the fixed base 622 instead of the clamping block 625 that could limit the pressure on the window covering 200.

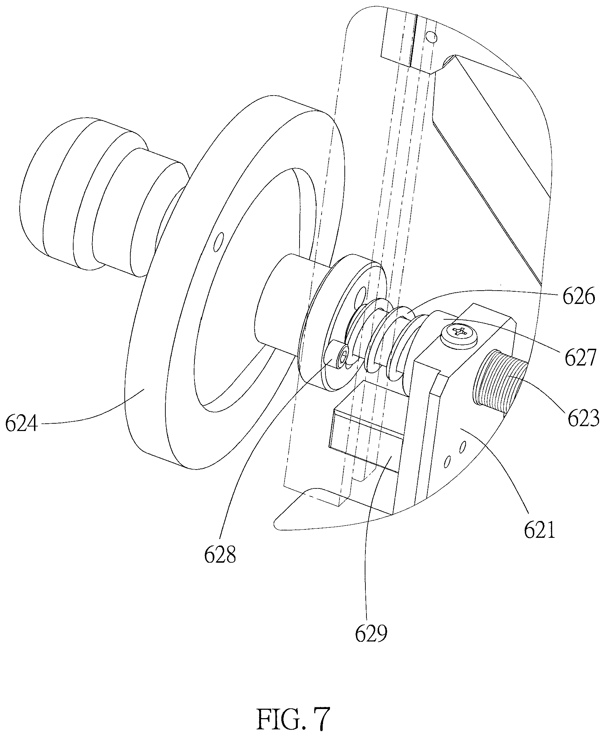

The clamping device 620 further includes a spring 626, a hub 627, a first stopping block 628, and a second stopping block 629. The spring 626 and the hub 627 fit the round section 623a of the screw rod 623, the hub 627 abuts against the fixed base 621, and the spring 626 has opposite ends urging the hub 627 and the operating wheel 624 respectively. As shown in FIG. 7, the first stopping block 628 is fixed to the operating wheel 624 to move together with the operating wheel 624. The second stopping block 629 is fixed to the fixed base 621. While the operating wheel 624 keeps being turned, the screw rod 623 is moved toward the fixed base 622 until the first stopping block 628 abuts against the second stopping block 629 that results in the operating wheel 624 not being turned anymore. At the same time, the spring 626 urges the operating wheel 624 in a direction opposite to that of the screw rod 623 to hold the clamping block 625 at a position which may firmly press the window covering 200. As a result, the clamping device 620 would provide the window covering a suitable and consistent pressure which is benefit to the following cutting operation, and would not damage the window covering 200.

The cutting device 630 is mounted on the rigid board 612 of the machine base 610 and adjacent to the clamping device 620 which has several functions, including cutting the window covering 20 in a safe way, blocking the window covering, and discharging the window covering. The detail of the cutting device 630 is hereafter.

The cutting device 630 includes a frame 631 and a stopping block 632. The frame 631 is vertically mounted on the rigid board 612 and between the clamping device 620 and the stopping block 632. As shown in FIG. 3, the stopping block 632 is fixed to two bars 633, and each of the bars 633 pass through a fixed block 634 to reciprocate the stopping block 632 along the machine base 610 and relative to the frame 631. An end of the window covering 200 abuts against the stopping block 632 for the following cutting operation. A knob 635 is provided to be operated to lock and unlock the stopping block 632 that could move and position the stopping block 632 at any desired position on the bars 633. It controls a length of the window covering 200 to be cut.

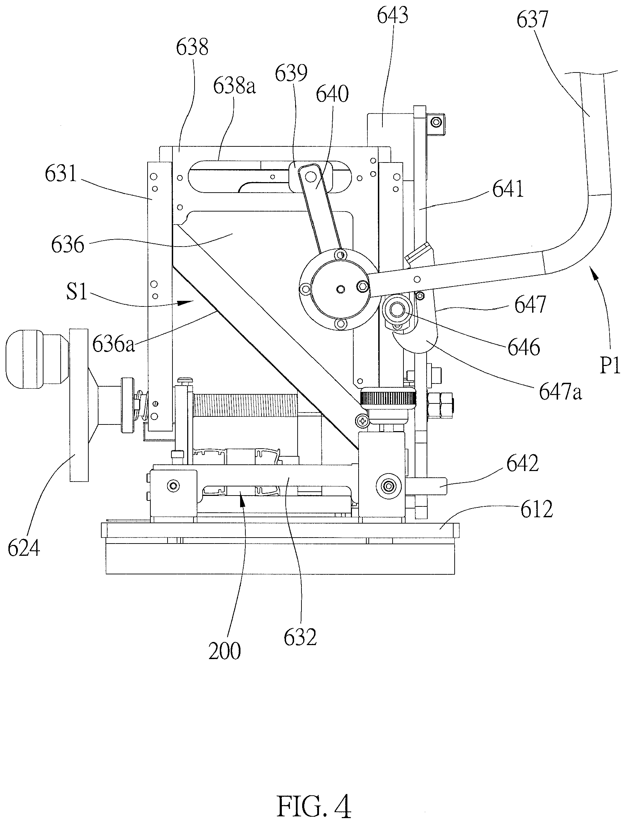

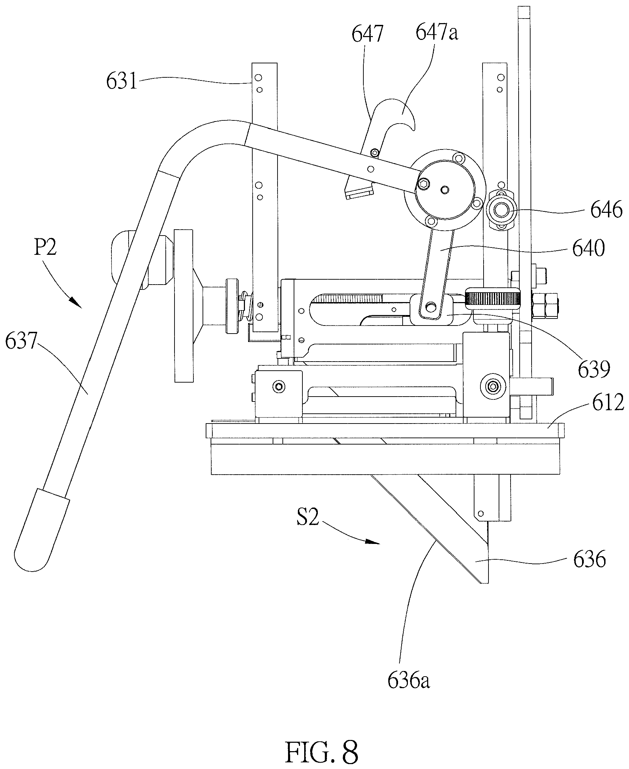

As shown in FIGS. from FIG. 1 to FIG. 8, the cutting device 630 further includes a cutter 636 and a control bar 637. The cutter 636 is fixed to a guiding block 638, and the guiding block 638 engages the frame 631 for reciprocation. The guiding block 638 has a transverse guiding slot 638a, in which a sliding block 639 is received for reciprocation. The control bar 637 has an end pivoted on a back board 631a of the frame 631, and connected to a linkage 640, which has an end pivoted on the sliding block 639. The control bar 637 is operated to be swung between a first position P1 (FIG. 4) and a second position P2 (FIG. 8) to move the sliding block 639 along the guiding slot 638a, so as to move the cutter 636 in a vertical direction between a pre-cut position S1 (FIG. 4) and a post-cut position S2 (FIG. 8). In order to have a clear showing of the elements of the present invention, the back board 631a is omitted in some drawings

The cutter 636 has a blade edge 636a and a body 636b. The blade edge 636a is oblique to the sustaining face 613a, and an angle between the blade edge 636a of the cutter 636 and the sustaining face 613a is between 0 and 90 degrees. The angle of the blade edge 636a of the cutter 636 is determined by the window covering 200 to be cut. A preferable angle between the blade edge 636a of the cutter 636 and the sustaining face 613a is 45 degrees. While the cutter 636 is being moved from the pre-cut position S1 to the post-cut position S2, the first rail 201, the covering material 202, and the second rail 203 of the window covering 200 are cut by the blade edge 636a in sequence. As a result, the window covering 200 is cut in an easy way when the cutter 636 is moved to the post-cut position S2 from the pre-cut position S1. Besides, in order to ensure the cutting quality, the cutter 636 is parallel to an edge of the non-rigid pad 613, and is very close to the edge when the cutter 636 arrives at the post-cut position S2 to provide the window covering a strong support. While the blade edge 636a of the cutter 636 passes through the cutting slot 612a, the body 636b would abut against the edge of the non-rigid pad 613 that makes the window covering 200 have a flat cutting facet. Sometime, the cutter 636 might cut the sustaining face 613a of the non-rigid pad 613 if the cutter 636 is tilted. The property of the non-rigid pad 613 would protect the blade edge 636b from being damaged. In the present invention, the non-rigid pad 613 is made of reinforced plastics, which is softer than the blade edge 636b of the cutter 636. In practice, any material softer than the blade edge 636b could be selected to be the non-rigid pad 613.

As shown in FIG. 1 and FIG. 6, the cutting device 630 further includes a connecting bar 641, a connecting block 642, and a movable block 643. The connecting bar 641 is pivotally connected to the frame 631 by a pin 644. The connecting block 642 has an end fixed to the bar 633. A rod 645 is transversely connected to the connecting block 642, and engages a slot 641a of the connecting bar 641. Since the stopping blocks 632 are fixed to the bars 633, the connecting bar 641 is linked to the stopping blocks 632 through the connecting block 642. The connecting bar 641 further has an elongated slot 641b. An axial line L1 and a central line L2 are defined here, wherein the axial line L1 is an imaginary line perpendicular to the sustaining face 613a, and the central line L2 is an imaginary line passing through a long axis of the elongated slot 641b. The central line L2 of the elongated slot 641b is oblique to the axial line L1. In other words, when the cutter 636 is at the pre-cut position S1 and the connecting bar 641 is upright, there still is a small angle between the elongated slot 641b and the axial line L1 to make the elongated slot 641b oblique.

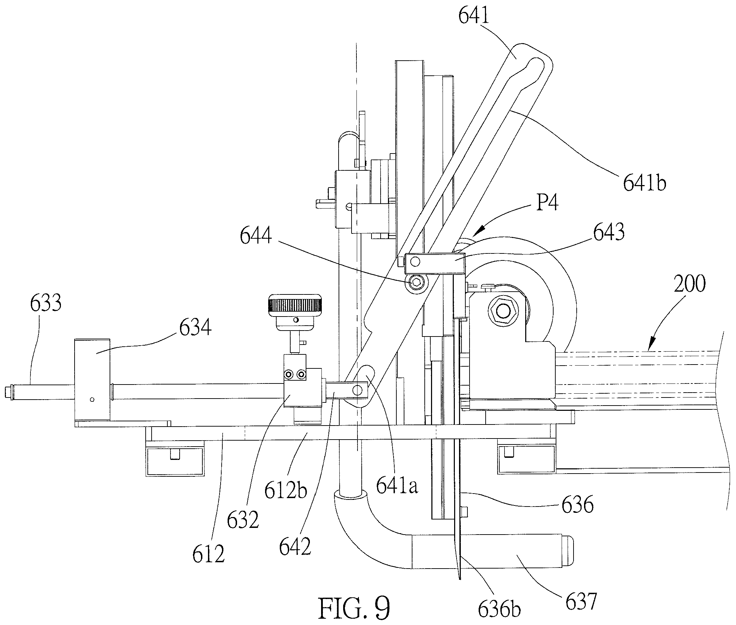

The movable block 643 is fixed to the guiding block 638, and has a portion received in the elongated slot 641b. While the control bar 637 is swung between the first position P1 and the second position P2 to move the cutter 636 between the pre-cut position S1 and the post-cut position S2, it will move the movable block 643 along the elongated slot 641b between a third position P3(FIG. 6) and a fourth position (FIG. 9). For the movable block 643 at the third position P3, the connecting bar 641 moves the stopping blocks 632 approaching the cutter 636. At this time, the stopping blocks 632 are a stopper of the window covering 200, which is, the window covering 200 has an end abutting against the stopping blocks 632 for positioning. On the contrary, when the movable block 643 is moved toward the fourth position P4, with the design of the oblique elongated slot 641a, it could push the connecting bar 641 outwards to move the stopping blocks 632 away from the cutter 636. At this time, the discharging opening 612b under a space between the guiding surface 614a of the guiding board 614 and the stopping blocks 632 gradually enlarges. As a result, the waste part of the window covering 200 after the cutting task would automatically drop off the machine base 610 through the discharging opening 612b. On the other hand, the stopping blocks 632 will return to wait for the next window covering when the movable block 643 is moved back to the third position P3.

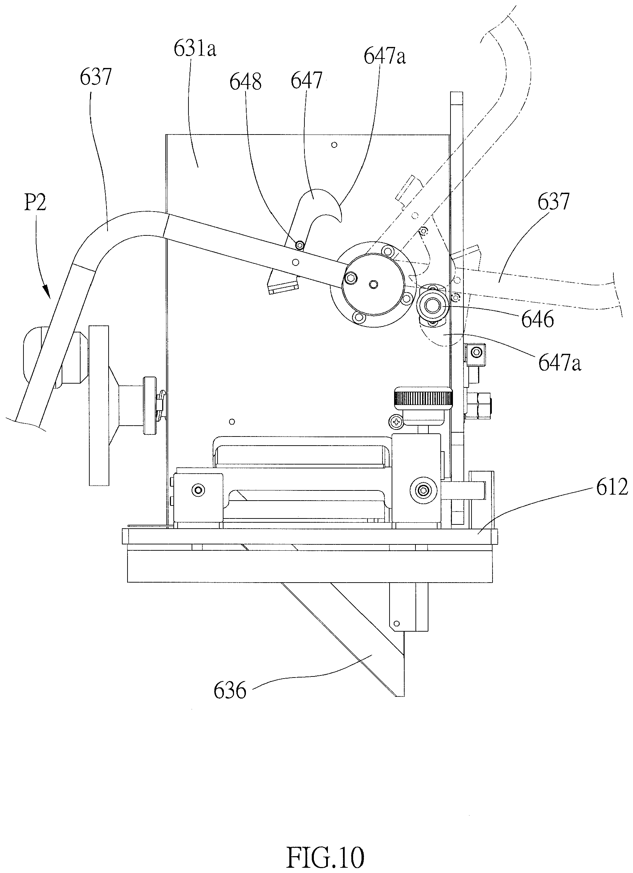

The cutting device 630 further includes a positioning post 646 and a locker 647. As shown in FIG. 1, FIG. 8, and FIG. 10, the positioning post 646 is fixed to the back board 631a of the frame 631, and the locker 647 is an L-shaped plate pivoted on the control bar 637 to be operated. The locker 647 has a hook 647a at an end thereof, and the hook 647a has a round edge. The hook 647a of the locker 647 engages the positioning post 646 when the control bar 637 is moved to the first position P1 (FIG. 4) to prevent the control bar 637 from being moved unexpectedly. On the contrary, if the locker 647 is moved to disengage the hook 647a with the positioning post 646, the control bar 637 is free to be moved to the second position P2 (FIG. 8 and FIG. 10) that will move the cutter 636 downwards for the cutting task.

The locker 647 is fixed with a stopping member 648, which is a bolt for example in the present invention, to separate the control bar 638 from the hook 647a of the locker 647. As a result, when the control bar 637 is swinging toward the first position P1 from the second position P2 (FIG. 10), the hook 647a will not touch the control bar 637, and keeps in a suspended status. It would makes the round edge of the hook 647a abut against the positioning post 646. While the control bar 637 continually approaches the first position, it will move the locker 647 to make the hook 647a automatically engage the positioning post 646 because of gravity. As a result, the control bar 637 is locked automatically when the control bar 637 arrives at the first position P1.

In conclusion, the cutting machine 100 provides the blade edge 636a of the cutter 636 oblique to the sustaining face 613a that would make the window covering have a nice cutting facet. For the sustaining face 613a of the non-rigid pad 613 softer than the blade edge 636a of the cutter 636, it could protect the blade edge 636a and elongate the life of the cutter 636. The unique clamping device 620 of the present invention provides a consistent pressure to all kinds of the window coverings. It could avoid the bad effect while the pressure to the window coverings is too large or too small. The cutting machine 100 of the present invention further provides the safe design, which avoid the cutter from be activated unexpectedly, and auto-discharging function. It is a nice design.

It must be pointed out that the embodiments described above are only some preferred embodiments of the present invention. All equivalent structures which employ the concepts disclosed in this specification and the appended claims should fall within the scope of the present invention as defined by the claims.

## Claims

1. A cutting machine (100) for cutting a window covering (200), wherein the window covering (200) includes a first rail (201), a covering material (202), and a second rail (203), comprising:
a machine base (610) having a sustaining face (613a) for putting the window covering (200) thereon; and
a cutting device (630) provided on the machine base (610), and including a cutter (636), which is controllable to reciprocate in a direction substantially perpendicular to the sustaining face (613a), wherein the cutter (636) has a blade edge (636a), and an angle is formed between the blade edge (636a) and the sustaining face (613a) to cut the first rail (201), the covering material (202), and the second rail (203) in sequence,
**characterized in that**:
the machine base (610) is provided with a non-rigid pad (613), and the sustaining face (613a) is formed on the non-rigid pad (613);
wherein the machine base (610) further includes a rigid board (612) and a guiding board (614); the non-rigid pad (613) and the guiding board (614) are fixed to the rigid board (612), and a cutting slot (612a) is formed between non-rigid pad (613) and the guiding board (614) for the cutter (636) to pass therethrough; the rigid board (612) is provided with a discharging opening (612b), which is lower than the sustaining face (613a); wherein the guiding board (614) is fixed to the rigid board (612) in an oblique direction and has a guiding surface (614a) which slopes towards the discharging opening (612b);
and a cut-off part of the window covering (200) after being cut leaves the machine base (610) through the guiding board (614) and the discharging opening (612b) in sequence.

2. The cutting machine (100) of claim 1, wherein the angle between the blade edge (636a) and the sustaining face (613a) is between the 0 and 90 degrees.

3. The cutting machine (100) of claim 1, wherein the cutter (636) crosses an edge of the non-rigid pad (613) and is adjacent to the edge of the non-rigid pad (613) when the cutter (636) is moved to cut the window covering (200).

4. The cutting machine (100) of claim 1, wherein the cutting device (630) further includes a frame (631) and a control bar (637); the cutter (636) is slidably connected to the frame (631) for reciprocation; the control bar (637) is pivoted on the frame (631) to be moved between a first position (P1) and a second position (P2); and the cutter (636) is moved by moving the control bar (637).

5. The cutting machine (100) of claim 4, wherein the cutting device (630) further includes a positioning post (646) and a locker (647); the positioning post (646) is fixed to the frame (631); the locker (647) is pivoted on the control bar (637); the locker (647) has a hook (647a) to engage the positioning post (646) when the control bar (637) is moved to the first position (P1), and disengage the positioning post (646) when the control bar (637) is moved to the second position (P2).

6. The cutting machine (100) of claim 5, wherein the cutting device (630) further includes a stopping member (648) fixed to the locker (647) to separate the control bar (637) from the hook (647a).

7. The cutting machine (100) of claim 5, wherein the hook (647a) of the locker (647) has a round edge to abut against the positioning post (646) and move the locker (647) off when the control bar (637) is being moved to the first position (P1) from the second position (P2), and then the locker (647) automatically moves back to engage the positioning post (646) because of gravity when the control bar (637) arrives at the first position (P1).

8. The cutting machine (100) of claim 4, wherein the cutting device (630) further includes a connecting bar (641), a stopping block (632), and a movable block (643); the connecting bar (641) is pivotally connected to the frame (631) to drive the stopping block (632) to reciprocate along the machine base (610); the connecting bar (641) has an elongated slot (641b); the elongated slot (641b) is oblique to an axial line (L1), which is perpendicular to the sustaining face (613a); the movable block (643) has a portion received in the elongated slot (641b) to be moved along with the control bar (637) between a third position (P3) and a fourth position (P4); the movable block (643) drives the connecting bar (641) to move when the movable block (643) is moved between the third position (P3) and the fourth position (P4); the connecting bar (641) drives the stopping block (632) to move toward the cutter (636) when the movable block (643) is moved to the third position (P3), and the connecting bar (641) drives the stopping block (632) to move away from the cutter (636) when the movable block (643) is moved to the fourth position (P4).

9. The cutting machine (100) of claim 8, wherein the cutting device (630) further includes at least one bar (633); the at least one bar (633) has an end proximal to the sustaining face (613a) and an end distal to the sustaining face (613a); the stopping block (632) is connected to the at least one bar (633), and is movable on the at least one bar (633) and fixed at a position by operating a knob (635).

10. The cutting machine (100) of claim 1, further comprising a clamping device (620) having two fixed bases (621, 622), a clamping block (625), a screw bar (623), an operating wheel (624), and a spring (626); the fixed bases (621, 622) are mounted on the machine base (610), the clamping block (625) is movable between the fixed bases (621, 622), the screw bar (623) is rotatably mounted on the fixed bases (621, 622) while the clamping block (625) is screwed with the screw bar (623), and the operating wheel (624) is fixed to an end of the screw bar (623); the spring (626) fits the screw bar (623) and has opposite ends urging the operating wheel (624) and one of the fixed bases (621, 622), whereby the clamping block (625) is moved between the fixed bases (621, 622) by turning the operating wheel (624).

11. The cutting machine (100) of claim 10, wherein the clamping device (620) further includes a first stopping block (628) and a second stopping block (629); the first stopping block (628) is fixed to the operating wheel (624), and the second stopping block (629) is fixed to one of the fixed bases (621, 622) near the operating wheel (624); when the clamping block (625) clamps the window covering (200) by turning the operating wheel (624), the clamping block (625) stops further moving and clamping even when the operating wheel (624) is further being turned, while the screw bar (623) is turned and moved toward the direction away from the operating wheel (624); further turning of the operating wheel (624) will make the first stopping block (628) abut against the second stopping block (629) to stop the further turning of the operating wheel (624).

## Patentansprüche

1. Eine Schneidemaschine (100) zum Schneiden einer Fensterabdeckung (200), wobei die Fensterabdeckung (200) eine erste Schiene (201), ein Abdeckmaterial (202) und eine zweite Schiene (203) aufweist, umfassend:
eine Maschinenbasis (610), umfassend eine Unterstützungsfläche (613a) zum darauf Platzieren der Fensterabdeckung (200), und
eine Schneidvorrichtung (630), die auf der Maschinenbasis (610) vorgesehen ist und einen Schneider (636) aufweist, der steuerbar ist, um sich in einer Richtung im Wesentlichen senkrecht zu der Unterstützungsfläche (613a) hin und her zu bewegen, wobei der Schneider (636) eine Klingenkante (636a) hat und ein Winkel zwischen der Klingenkante (636a) und der Unterstützungsfläche (613a) ausgebildet ist, um die erste Schiene (201), das Abdeckmaterial (202) und die zweite Schiene (203) der Reihe nach zu schneiden,
**dadurch gekennzeichnet, dass**:
die Maschinenbasis (610) mit einer nicht-steifen Polsterung (613) ausgestattet ist und die Unterstützungsfläche (613a) auf der nicht-steifen Polsterung (613) ausgebildet ist,
wobei die Maschinenbasis (610) ferner eine steife Platte (612) und eine Führungsplatte (614) umfasst, die nicht-steife Polsterung (613) und die Führungsplatte (614) an der steifen Platte (612) befestigt sind und ein Schneidschlitz (612a) zwischen der nicht-steifen Polsterung (613) und der Führungsplatte (614) ausgebildet ist, damit der Schneider (636) diesen durchqueren kann, wobei die steife Platte (612) mit einer Auslassöffnung (612b) versehen ist, die niedriger als die Unterstützungsfläche (613a) ist, wobei die Führungsplatte (614) in einer schrägen Richtung an der steifen Platte (612) befestigt ist und eine Führungsfläche (614a) hat, die in Richtung zu der Auslassöffnung (612b) geneigt ist,
und wobei ein abgeschnittener Teil der Fensterabdeckung (200) nach dem Schneiden die Maschinenbasis (610) der Reihe nach durch die Führungsplatte (614) und die Auslassöffnung (612b) hindurch verlässt.

2. Die Schneidemaschine (100) nach Anspruch 1, wobei der Winkel zwischen der Klingenkante (636a) und der Unterstützungsfläche (613a) zwischen 0 und 90 Grad beträgt.

3. Die Schneidemaschine (100) nach Anspruch 1, wobei der Schneider (636) eine Kante der nicht-steifen Polsterung (613) kreuzt und benachbart zu der Kante der nicht-steifen Polsterung (613) ist, wenn der Schneider (636) bewegt wird, um die Fensterabdeckung (200) zu schneiden.

4. Die Schneidemaschine (100) nach Anspruch 1, wobei die Schneidvorrichtung (630) ferner einen Rahmen (631) und eine Steuerstange (637) umfasst, der Schneider (636) für eine Hin- und Herbewegung verschiebbar mit dem Rahmen (631) verbunden ist, die Steuerstange (637) an dem Rahmen (631) geschwenkt wird, um zwischen einer ersten Position (P1) und einer zweiten Position (P2) bewegt zu werden, und der Schneider (636) durch Bewegen der Steuerstange (637) bewegt wird.

5. Die Schneidemaschine (100) nach Anspruch 4, wobei die Schneidvorrichtung (630) ferner einen Positionierpfosten (646) und eine Verriegelung (647) umfasst, der Positionierpfosten (646) an dem Rahmen (631) befestigt ist, die Verriegelung (647) an der Steuerstange (637) geschwenkt wird, die Verriegelung (647) einen Haken (647a) umfasst, um mit dem Positionierpfosten (646) ineinanderzugreifen, wenn die Steuerstange (637) in die erste Position (P1) bewegt wird, und mit dem Positionierpfosten (646) außer Eingriff zu gelangen, wenn die Steuerstange (637) in die zweite Position (P2) bewegt wird.

6. Die Schneidemaschine (100) nach Anspruch 5, wobei die Schneidvorrichtung (630) ferner ein Stopperelement (648) umfasst, das an der Verriegelung (647) befestigt ist, um die Steuerstange (637) von dem Haken (647a) zu trennen.

7. Die Schneidemaschine (100) nach Anspruch 5, wobei der Haken (647a) der Verriegelung (647) eine runde Kante hat, um an den Positionierpfosten (646) anzustoßen und die Verriegelung (647) wegzubewegen, wenn die Steuerstange (637) aus der zweiten Position (P2) in die erste Position (P1) bewegt wird, und wobei sich dann die Verriegelung (647) aufgrund der Schwerkraft automatisch zurückbewegt, um mit dem Positionierpfosten (646) in Eingriff zu sein, wenn die Steuerstange (637) an der ersten Position (P1) ankommt.

8. Die Schneidemaschine (100) nach Anspruch 4, wobei die Schneidvorrichtung (630) ferner eine Verbindungsstange (641), einen Stopperblock (632) und einen bewegbaren Block (643) umfasst, wobei die Verbindungsstange (641) schwenkbar mit dem Rahmen (631) verbunden ist, um den Stopperblock (632) anzutreiben, um sich entlang der Maschinenbasis (610) hin und her zu bewegen, die Verbindungsstange (641) einen langgestreckten Schlitz (641b) umfasst, der langgestreckte Schlitz (641b) schräg zu einer Axiallinie (L1) ist, die senkrecht zu der Unterstützungsfläche (613a) ist, der bewegbare Block (643) einen Abschnitt umfasst, der in dem langgestreckten Schlitz (641b) aufgenommen ist, um zusammen mit der Steuerstange (637) zwischen einer dritten Position (P3) und einer vierten Position (P4) bewegt zu werden, der bewegbare Block (643) die Verbindungsstange (641) antreibt, um sich zu bewegen, wenn der bewegbare Block (643) zwischen der dritten Position (P3) und der vierten Position (P4) bewegt wird, die Verbindungsstange (641) den Stopperblock (632) antreibt, um sich in Richtung zu dem Schneider (636) zu bewegen, wenn der bewegbare Block (643) in die dritte Position (P3) bewegt wird, und die Verbindungsstange (641) den Stopperblock (632) antreibt, um sich von dem Schneider (636) wegzubewegen, wenn der bewegbare Block (643) in die vierte Position (P4) bewegt wird.

9. Die Schneidemaschine (100) nach Anspruch 8, wobei die Schneidvorrichtung (630) ferner mindestens eine Stange (633) umfasst, die mindestens eine Stange (633) ein Ende proximal zu der Unterstützungsfläche (613a) und ein Ende distal zu der Unterstützungsfläche (613a) hat, der Stopperblock (632) mit der mindestens einen Stange (633) verbunden ist und auf der mindestens einen Stange (633) bewegbar ist und durch Betätigen eines Knopfes (635) in einer Position fixiert wird.

10. Die Schneidemaschine (100) nach Anspruch 1, ferner umfassend eine Klemmvorrichtung (620), umfassend zwei feste Basen (621, 622), einen Klemmblock (625), eine Gewindestange (623), ein Betätigungsrad (624) und eine Feder (626), wobei die festen Basen (621, 622) an der Maschinenbasis (610) montiert sind, der Klemmblock (625) zwischen den festen Basen (621, 622) bewegbar ist, die Gewindestange (623) drehbar an den festen Basen (621, 622) montiert ist, währen der Klemmblock (625) mit der Gewindestange (623) verschraubt ist, und das Betätigungsrad (624) an einem Ende der Gewindestange (623) befestigt ist, die Feder (626) an der Gewindestange (623) angebracht ist und entgegengesetzte Enden hat, die das Betätigungsrad (624) und eine der festen Basen (621, 622) drängen, wodurch der Klemmblock (625) durch Drehen des Betätigungsrades (624) zwischen den festen Basen (621, 622) bewegt wird.

11. Die Schneidemaschine (100) nach Anspruch 10, wobei die Klemmvorrichtung (620) ferner einen ersten Stopperblock (628) und einen zweiten Stopperblock (629) umfasst, der erste Stopperblock (628) an dem Betätigungsrad (624) befestigt ist und der zweite Stopperblock (629) an einer der festen Basen (621, 622) nahe bei dem Betätigungsrad (624) befestigt ist, wobei, wenn der Klemmblock (625) die Fensterabdeckung (200) durch Drehen des Betätigungsrades (624) festklemmt, der Klemmblock (625) ein weiteres Bewegen und Festklemmen beendet, selbst wenn das Betätigungsrad (624) weiter gedreht wird, während die Gewindestange (623) gedreht und in Richtung weg von dem Betätigungsrad (624) bewegt wird, wobei ein weiteres Drehen des Betätigungsrades (624) bewirkt, dass der erste Stopperblock (628) an den zweiten Stopperblock (629) anstößt, um das weitere Drehen des Betätigungsrades (624) zu stoppen.

## Revendications

1. Machine de coupe (100) pour couper un couvre-fenêtre (200), le couvre-fenêtre (200) comprenant un premier rail (201), un matériau de couverture (202) et un second rail (203), comprenant :
une base de machine (610) ayant une face de soutien (613a) pour placer le couvre-fenêtre (200) sur cette dernière ; et
un dispositif de coupe (630) prévu sur la base de machine (610) et comprenant un couteau (636) qui peut être commandé pour effectuer un mouvement de va-et-vient dans une direction sensiblement perpendiculaire à la face de soutien (613a), le couteau (636) ayant une arête de lame (636a), et un angle étant formé entre l'arête de lame (636a) et la face de soutien (613a) pour couper le premier rail (201), le matériau de couverture (202) et le second rail (203) en séquence,
**caractérisée en ce que** :
la base de machine (610) est prévue avec un patin non rigide (613), et la face de soutien (613a) est formée sur le patin non rigide (613) ;
dans laquelle la base de machine (610) comprend en outre une plaque rigide (612) et une plaque de guidage (614) ; le patin non rigide (613) et la plaque de guidage (614) sont fixés sur la plaque rigide (612), et une fente de coupe (612a) est formée entre le patin non rigide (613) et la plaque de guidage (614) pour que le couteau (636) passe à travers ; la plaque rigide (612) est prévue avec une ouverture de décharge (612b) qui est inférieure à la face de soutien (613a) ; dans laquelle la plaque de guidage (614) est fixée sur la plaque rigide (612) dans une direction oblique et a une surface de guidage (614a) qui s'incline vers l'ouverture de décharge (612b) ;
et une partie découpée du couvre-fenêtre (200) après avoir été coupée, sort de la base de machine (610) par la plaque de guidage (614) et l'ouverture de décharge (612b) en séquence.

2. Machine de coupe (100) selon la revendication 1, dans laquelle l'angle entre l'arête de lame (636a) et la face de soutien (613a) est compris entre 0 et 90 degrés.

3. Machine de coupe (100) selon la revendication 1, dans laquelle le couteau (636) traverse un bord du patin non rigide (613) et est adjacent au bord du patin non rigide (613) lorsque le couteau (636) est déplacé pour couper le couvre-fenêtre (200).

4. Machine de coupe (100) selon la revendication 1, dans laquelle le dispositif de coupe (630) comprend en outre un bâti (631) et une barre de commande (637); le couteau (636) est raccordé, de manière coulissante, au bâti (631) pour le mouvement de va-et-vient ; la barre de commande (637) est pivotée sur le bâti (631) pour être déplacée entre une première position (P1) et une deuxième position (P2) ; et le couteau (636) est déplacé en déplaçant la barre de commande (637).

5. Machine de coupe (100) selon la revendication 4, dans laquelle le dispositif de coupe (630) comprend en outre un montant de positionnement (646) et un mécanisme de verrouillage (647); le montant de positionnement (646) est fixé au bâti (631); le mécanisme de verrouillage (647) est pivoté sur la barre de commande (637) ; le mécanisme de verrouillage (647) a un crochet (647a) pour mettre en prise le montant de positionnement (646) lorsque la barre de commande (637) passe dans la première position (P1) et se dégager du montant de positionnement (646) lorsque la barre de commande (637) passe dans la deuxième position (P2).

6. Machine de coupe (100) selon la revendication 5, dans laquelle le dispositif de coupe (630) comprend en outre un élément d'arrêt (648) fixé au mécanisme de verrouillage (647) pour séparer la barre de commande (637) du crochet (647a).

7. Machine de coupe (100) selon la revendication 5, dans laquelle le crochet (647a) du mécanisme de verrouillage (647) a un bord arrondi pour venir en butée contre le montant de positionnement (646) et dégager le mécanisme de verrouillage (647) lorsque la barre de commande (637) est déplacée vers la première position (P1) depuis la deuxième position (P2), et, ensuite, le mécanisme de verrouillage (647) revient automatiquement pour mettre en prise le montant de positionnement (646) en raison de la gravité lorsque la barre de commande (637) arrive dans la première position (P1).

8. Machine de coupe (100) selon la revendication 4, dans laquelle le dispositif de coupe (630) comprend en outre une barre de raccordement (641), un bloc d'arrêt (632), et un bloc mobile (643); la barre de raccordement (641) est raccordée, de manière pivotante, au bâti (631) pour entraîner le bloc d'arrêt (632) à effectuer un mouvement de va-et-vient le long de la base de machine (610) ; la barre de raccordement (641) a une fente allongée (641b) ; la fente allongée (641b) est oblique par rapport à une ligne axiale (L1), qui est perpendiculaire à la face de soutien (613a) ; le bloc mobile (643) a une partie reçue dans la fente allongée (641b) pour être déplacée conjointement avec la barre de commande (637) entre une troisième position (P3) et une quatrième position (P4) ; le bloc mobile (643) entraîne le déplacement de la barre de raccordement (641) lorsque le bloc mobile (643) est déplacé entre la troisième position (P3) et la quatrième position (P4) ; la barre de raccordement (641) entraîne le bloc d'arrêt (632) à se déplacer vers le couteau (636) lorsque le bloc mobile (643) est déplacé dans la troisième position (P3), et la barre de raccordement (641) entraîne le bloc d'arrêt (632) à s'éloigner du couteau (636) lorsque le bloc mobile (643) est déplacé dans la quatrième position (P4).

9. Machine de coupe (100) selon la revendication 8, dans laquelle le dispositif de coupe (630) comprend en outre au moins une barre (633) ; l'au moins une barre (633) a une extrémité proximale par rapport à la face de soutien (613a) et une extrémité distale par rapport à la face de soutien (613a) ; le bloc d'arrêt (632) est raccordé à l'au moins une barre (633), et est mobile sur l'au moins une barre (633) et fixée dans une position en actionnant un bouton (635).

10. Machine de coupe (100) selon la revendication 1, comprenant en outre un dispositif de serrage (620) ayant deux bases fixes (621, 622), un bloc de serrage (625), une barre de vis (623), une roue de commande (624), et un ressort (626) ; les bases fixes (621, 622) sont montées sur la base de machine (610), le bloc de serrage (625) est mobile entre les bases fixes (621, 622), la barre de vis (623) est montée de manière rotative sur les bases fixes (621, 622) tandis que le bloc de serrage (625) est vissé avec la barre de vis (623), et la roue de commande (624) est fixée sur une extrémité de la barre de vis (623) ; le ressort (626) permet de monter la barre de vis (623) et a des extrémités opposées poussant la roue de commande (624) et l'une des bases fixes (621, 622), de sorte que le bloc de serrage (625) est déplacé entre les bases fixes (621, 622) en faisant tourner la roue de commande (624).

11. Machine de coupe (100) selon la revendication 10, dans laquelle le dispositif de serrage (620) comprend en outre un premier bloc d'arrêt (628) et un second bloc d'arrêt (629) ; le premier bloc d'arrêt (628) est fixé sur la roue de commande (624), et le second bloc d'arrêt (629) est fixé sur l'une des bases fixes (621, 622) à proximité de la roue de commande (624) ; lorsque le bloc de serrage (625) sert le couvre-fenêtre (200) en faisant tourner la roue de commande (624), le bloc de serrage (625) arrête de se déplacer davantage et de serrer même lorsque la roue de commande (624) est entraînée en rotation, alors que la barre de vis (623) tourne et est déplacée vers la direction à distance de la roue de commande (624) ; la rotation supplémentaire de la roue de commande (624) permet au premier bloc d'arrêt (628) de venir en butée contre le second bloc d'arrêt (629) pour arrêter la rotation supplémentaire de la roue de commande (624).
